# EUROPÄISCHE PATENTSCHRIFT

(11) **EP 3 011 813 B1**
(45) Veröffentlichungstag und Bekanntmachung des Hinweises auf die Patenterteilung: **08.04.2020**
(21) Anmeldenummer: 15401103.5
(22) Anmeldetag: 15.10.2015
(51) Int. Cl.: A01B 23/02, A01B 35/22

(54) **BODENBEARBEITUNGSSCHAR**
SOIL PROCESSING SHARE
SOC DE PREPARATION DE SOL

(30) Priorität: 20.10.2014 DE 102014115211
(43) Veröffentlichungstag der Anmeldung: 27.04.2016
(73) Patentinhaber: Amazonen-Werke H. Dreyer GmbH & Co. KG, 49205 Hasbergen (DE)
(72) Erfinder: Scherf, Silvio, 39444 Hecklingen OT Cochstedt (DE); Polster, Joachim, 04229 Leipzig (DE)

(56) Entgegenhaltungen:
- EP-B1- 2 079 295
- FR-A1- 2 603 151
- US-A- 208 576

## Beschreibung

Die Erfindung betrifft ein an einem Werkzeughalter anzuordnendes Bodenbearbeitungswerkzeug gemäß des Oberbegriffs des Patentanspruches 1.

Ein derartiges Bodenbearbeitungswerkzeug ist in der EP 2 079 295 B1 beschrieben. Dieses Bodenbearbeitungswerkzeug ist als Grubberschar ausgebildet. Dieses Grubberschar weist eine Scharspitze und eine sich daran anschließende Führungsplatte auf. Das Grubberschar wird mit mindestens einer Schraube an einem Werkzeughalter, welcher zwei gegenüberliegende Seitenflächen aufweist, befestigt. Der obere Endabschnitt der Führungsplatte ist rückwärts in Richtung des Werkzeughalters abgebogen und mit einem Ausschnitt versehen, so dass in diesem Ausschnitt sich der Werkzeughalter befindet und die sich seitlich des Ausschnittes befindlichen Bereiche des nach rückwärts abgebogenen Endabschnittes sich beidseitig seitlich an dem Werkzeughalter anlegen. Hierdurch wird eine sichere seitliche Führung und Fixierung des Grubberschares, insbesondere der Führungsplatte an dem Werkzeughalter erreicht. Durch die abrupte Richtungsänderung der Rückseite der Führungsplatte durch das Abbiegen nach rückwärts, kommt es häufig hier zum Festhängen von Bodenteilen und in dem Boden sich befindlichen Pflanzenreste. Diese sammeln sich dann in dem Bereich der nach hinten abgebogenen Endabschnitte und den beidseitig den Werkzeughalter umfassenden und nach rückwärts abgebogenen Endabschnitten. Somit kommt es zu Verstopfungen.

Der Erfindung liegt die Aufgabe zu Grunde, die Verstopfungsgefahr im Bereich des Anlageelementes der Führungsplatte an dem Werkzeughalter zu vermeiden, zumindest wesentlich zu verringern.

Diese Aufgabe wird erfindungsgemäß dadurch gelöst, dass die Führungsplatte in sich verwunden ausgestaltet ist, dass das Anlageelement auf der rückwärtigen Seite des hinteren Bereichs des oberen Endes der Führungsplatte angeordnet ist, dass das Anlageelement den Zwischenraum zwischen der rückwärtigen Seite der Führungsplatte und der dem Anlageelement benachbarten Seitenfläche des Werkzeughalters ausfüllt, dass das Anlageelement von seiner oberen Seite schräg gegenüber der rückwärtigen Seite der Führungsplatte mit einem kontinuierlichen Übergang in die rückwärtige Seite der Führungsplatte übergeht.
Infolge dieser Maßnahme wird eine wesentlich verbesserte Anlage der Führungsplatte auf seiner Rückseite im oberen Endbereich der Führungsplatte an dem Werkzeughalter erreicht. Durch die erfindungsgemäße Ausgestaltung des Anlageelementes wird der Raum zwischen der Führungsplatte und der Seitenfläche des Werkzeughalters so ausgefüllt, dass der Boden und Pflanzenreste verbessert vorbei geleitet werden, ohne dass eine große Verstopfungsgefahr besteht. Durch die verbesserte Konturausbildung des Anlageelementes auf der Rückseite der Führungsplatte des Schares wird auch gleichzeitig eine bessere Anlage am Werkzeughalter gewährleistet.

Dieser kontinuierliche Übergang zwischen der Rückseite der Führungsplatte, des Werkzeughalters und des Anlageelementes wird in einfacher Weise dadurch erreicht, dass das Anlageelement von seiner an dem Werkzeughalter anliegenden Seite mit einer schrägen Fläche zur dem Anlageelement benachbarten äußeren hinteren Seitenkante der Führungsplatte abfällt und in diese in fließender Weise übergeht.

Eine seitliche Fixierung des unteren Bereiches der Führungsplatte und/oder der Scharspitze gegenüber dem Werkzeughalter wird in einfacher Weise dadurch erreicht, dass die Führungsplatte und/oder die Scharspitze auf ihrer Rückseite im Seitenbereich aus der rückwärtigen Fläche der Führungsplatte heraustretende und an den Werkzeughalter zur Anlage kommende Führungsbereiche aufweist.

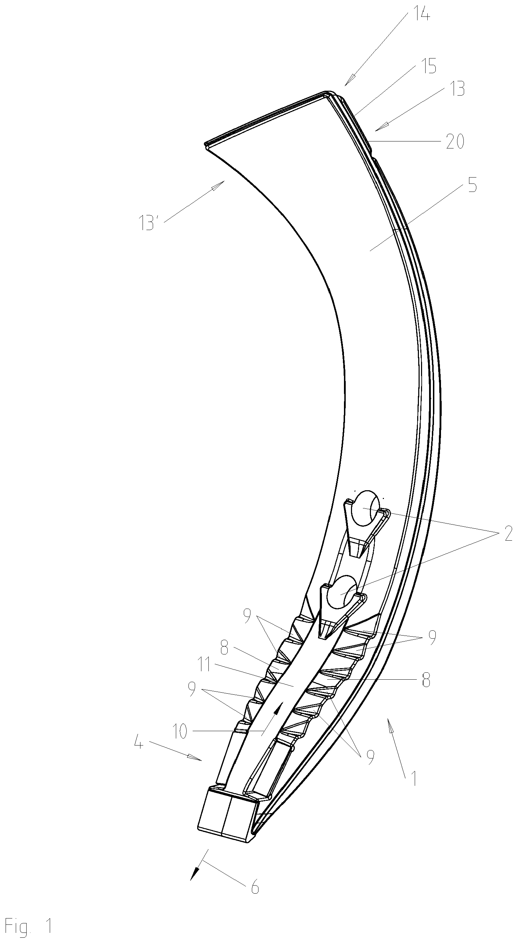

Weitere Einzelheiten der Erfindung sind der Beispielsbeschreibung und den Zeichnungen zu entnehmen. Die Zeichnungen zeigen
- Fig.1: das erfindungsgemäße Bodenbearbeitungswerkzeug in perspektivischer Darstellung von schräg vorn,

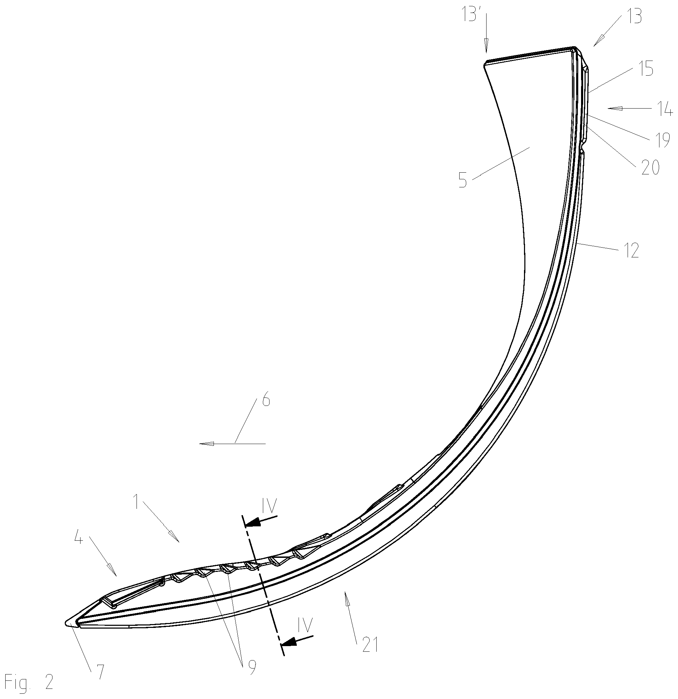

- Fig.2: das Bodenbearbeitungswerkzeug in Seitenansicht,

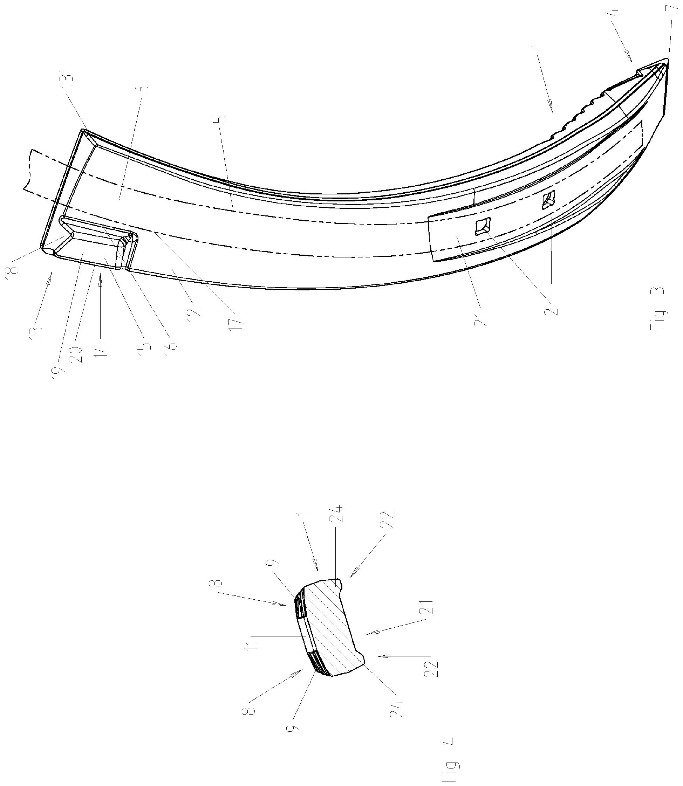

- Fig.3: das Bodenbearbeitungswerkzeug in perspektivischer Darstellung von schräg hinten und
- Fig.4: das Bodenbearbeitungswerkzeug im Schnitt A - A.

Das als Grubberschar 1 ausgebildete Bodenbearbeitungswerkzeug für eine landwirtschaftliche Maschine ist mittels durch die in dem Bodenbearbeitungswerkzeug 1 angeordneten Durchbrüche 2 zu steckenden Befestigungsmittel, beispielsweise Schrauben in nicht dargestellter Weise an einem mit strichpunktierten Linien dargestellten Werkzeughalter 3 befestigt. Das Bodenbearbeitungswerkzeug 1 weist einen vorderen zinkenartigen Bereich 4 auf, an dem sich eine Führungsplatte 5, welche, wie im Ausführungsbeispiel dargestellt, in sich verwunden ausgestaltet ist, anschließt. Die Führungsplatte 5 weist eine im Wesentlichen konkave Fläche in Fahrtrichtung 6 auf.

An der Zinkenspitze 7, die sich zu Beginn des zinkenartigen Bereiches 3 befindet, sind Hartmetallplatten 8, die beispielsweise aus Wolframcarbid stehen können, angeordnet. Beabstandet zu der Zinkenspitze 7 beginnen auf beiden Seiten des Grubberschares 1 Seitenstreifen 8, in denen kerbartige Vertiefungen 9 angeordnet sind. Zwischen den beiden Seitenstreifen 8 befindet sich in der Mitte des Grubberschares 1 ein sich in Längsrichtung 10 des zinkenartigen Bereiches 3 des Grubberschares 1 zumindest annähernd glatter Mittelstreifenbereich 11 in jedem Seitenstreifen 8 sind mehr als drei, im Ausführungsbeispiel sechs kerbartige Vertiefungen 9 angeordnet. Die beiden mit kerbartigen Vertiefungen 9 versehenen Seitenstreifen 8 und der zumindest annähernd glatte Mittelstreifen 11 weisen jeweils zumindest annähernd die gleiche Breite auf.

Auf der Rückseite 12 des hinteren Bereiches 13 des nach vorn gebogenen Bereiches 13' des oberen Endes 14 der Führungsplatte 4 ist ein Anlageelement 15 zur Anlage an dem mit strichpunktierten Linien dargestellten Werkzeughalter 3 angeordnet. Das Anlageelement 15 füllt den Zwischenraum 16 zwischen der Rückseite 12 der Führungsplatte 5 und der Seitenfläche 17 des Werkzeughalters 3 aus. Das Anlageelement 15 geht von seiner oberen Seite 18 schräg gegenüber der rückwärtigen Seite 12 der Führungsplatte 5 mit einem kontinuierlichen Übergang in die rückwärtige Seite 12 der Führungsplatte 4 über. Das Anlageelement 15 fällt von seiner an dem Werkzeughalter 3 anliegenden Seite mit einer schrägen Fläche 19 zur äußeren hinteren Seitenkante 20 der Führungsplatte 5 ab und geht in diese in fließender Weise über.

Hierdurch wird der Raum zwischen der Führungsplatte 4 und der Seitenfläche 17 des Werkzeughalters 3 so ausgefüllt, dass der Boden und Pflanzenreste verbessert vorbei geleitet werden, ohne dass eine große Verstopfungsgefahr besteht. Durch die verbesserte Konturausbildung des Anlageelementes 15 auf der Rückseite 12 der Führungsplatte 5 des Schares 1 wird auch gleichzeitig eine bessere Anlage am Werkzeughalter 3 gewährleistet.

Die Führungsplatte 5 und die Scharspitze 7 weisen auf ihrer Rückseite 21 im Seitenbereich 22 aus der rückwärtigen Fläche 22 der Führungsplatte 5 heraustretende und an den Werkzeughalter 3 zur Anlage kommende Führungsbereiche 24 auf. Hierdurch wird eine verbesserte seitliche Fixierung des unteren Bereiches der Führungsplatte 5 und/oder der Scharspitze 7 gegenüber dem Werkzeughalter 3 erreicht.

## Patentansprüche

1. An einen Werkzeughalter anzuordnendes Bodenbearbeitungsschar, insbesondere Grubberschar (1) mit einer sich an die Scharspitze (7) anschließenden Führungsplatte (5), wobei die Scharspitze (7) und/oder die Führungsplatte (5) mindestens ein Loch (2) umfasst, das ein Befestigungselement zum Befestigen an dem Werkzeughalter (3) aufnehmen soll, wobei die Führungsplatte (5) eine im wesentlichen konkave Fläche in Fahrtrichtung (6) aufweist, wobei sich an dem oberen Endabschnitt (10) in Richtung der rückwärtigen Seite (12) der Führungsplatte (5) ein Anlageelement (15) zur Anlage an dem Werkzeughalter (3) befindet, wobei der Werkzeughalter (3) zwei gegenüberliegende Seitenflächen (17) aufweist, **dadurch gekennzeichnet, dass** die Führungsplatte (5) in sich verwunden ausgestaltet ist, dass das Anlageelement (15) auf der rückwärtigen Seite (12) des hinteren Bereichs (13) des oberen Endes (14) der Führungsplatte (5) angeordnet ist, dass das Anlageelement (15) den Zwischenraum (16) zwischen der rückwärtigen Seite (12) der Führungsplatte (5) und der dem Anlageelement (15) benachbarten Seitenfläche (17) des Werkzeughalters (3) ausfüllt, dass das Anlageelement (15) von seiner oberen Seite (18) schräg gegenüber der rückwärtigen Seite (12) der Führungsplatte (5) mit einem kontinuierlichen Übergang in die rückwärtige Seite (12) der Führungsplatte (5) übergeht.

2. Bodenbearbeitungsgerät nach Anspruch 1, wobei die Führungsplatte (5) eine äußere hintere Seitenkante (20) aufweist, **dadurch gekennzeichnet, dass** das Anlageelement (15) von seiner an dem Werkzeughalter (3) anliegenden Seite mit einer schrägen Fläche (19) zur dem Anlageelement (15) benachbarten äußeren hinteren Seitenkante (20) der Führungsplatte (5) abfällt und in diese in fließender Weise übergeht.

3. Bodenbearbeitungsgerät nach zumindest einem der vorstehenden Ansprüche, **dadurch gekennzeichnet, dass** die Führungsplatte (5) und/oder die Scharspitze (7) auf ihrer Rückseite (21) im Seitenbereich (42) aus der rückwärtigen Fläche der Führungsplatte (5) heraustretende und an den Werkzeughalter (3) zur Anlage kommende Führungsbereiche (20) aufweist.

## Claims

1. Soil-tilling blade to be arranged on a tool holder, in particular cultivator blade (1) having a guide plate (5) adjoining the blade tip (7), wherein the blade tip (7) and/or the guide plate (5) comprise/comprises at least one hole (2), which is intended to accommodate a fastening element for fastening on the tool holder (3), wherein the guide plate (5) has a substantially concave surface in the direction of travel (6), wherein an abutment element (10) for butting against the tool holder (3) is located on the upper end portion (10) in the direction of the rear side (12) of the guide plate (5), wherein the tool holder (3) has two opposite side surfaces (17), **characterized in that** the guide plate (5) is of twisted configuration, **in that** the abutment element (15) is arranged on the rear side (12) of the rear region (13) of the upper end (14) of the guide plate (5), **in that** the abutment element (15) fills the intermediate space (16) between the rear side (12) of the guide plate (5) and that side surface (17) of the tool holder (3) that is adjacent to the abutment element (15), **in that** the abutment element (15) merges obliquely from its upper side (18) in relation to the rear side (12) of the guide plate (5) with a continuous transition into the rear side (12) of the guide plate (5).

2. Soil-tilling device according to Claim 1, wherein the guide plate (5) has an outer rear side edge (20), **characterized in that** the abutment element (15) drops from its side adjacent to the tool holder (3) with an oblique surface (19) to the outer rear side edge (20), adjacent to the abutment element (15), of the guide plate (5) and merges into the latter in a continuous manner.

3. Soil-tilling device according to at least one of the preceding claims, **characterized in that** the guide plate (5) and/or the blade tip (7) on their/its rear side (21) in the side region (42) has guide regions (20) which emerge from the rear surface of the guide plate (5) and come to butt against the tool holder (3).

## Revendications

1. Soc de préparation de sol devant être disposé sur un porte-outil, en particulier soc de déchaumage (1), comprenant une plaque de guidage (5) se raccordant à la pointe du soc (7), la pointe du soc (7) et/ou la plaque de guidage (5) comprenant au moins un trou (2) qui doit recevoir un élément de fixation pour la fixation au porte-outil (3), la plaque de guidage (5) présentant une surface essentiellement concave dans la direction de conduite (6), un élément d'appui (15) destiné à s'appuyer contre le porte-outil (3) se trouvant sur la portion d'extrémité supérieure (10) dans la direction du côté arrière (12) de la plaque de guidage (5), le porte-outil (3) présentant deux surfaces latérales opposées (17), **caractérisé en ce que** la plaque de guidage (5) est réalisée de manière vrillée sur elle-même, **en ce que** l'élément d'appui (15) est disposé sur le côté arrière (12) de la région arrière (13) de l'extrémité supérieure (14) de la plaque de guidage (5), **en ce que** l'élément d'appui (15) remplit l'espace intermédiaire (16) entre le côté arrière (12) de la plaque de guidage (5) et la surface latérale (17) du porte-outil (3) adjacente à l'élément d'appui (15), **en ce que** l'élément d'appui (15) se prolonge depuis son côté supérieur (18) obliquement par rapport au côté arrière (12) de la plaque de guidage (15) avec une transition continue jusqu'au côté arrière (12) de la plaque de guidage (5).

2. Appareil de préparation du sol selon la revendication 1, dans lequel la plaque de guidage (5) présente une arête latérale arrière extérieure (20), **caractérisé en ce que** l'élément d'appui (15) descend depuis son côté s'appliquant contre le porte-outil (3) avec une surface oblique (19) vers l'arête latérale arrière extérieure (20) de la plaque de guidage (5) adjacente à l'élément d'appui (15) et se prolonge de manière fluide dans celle-ci.

3. Appareil de préparation du sol selon au moins l'une des revendications précédentes, **caractérisé en ce que** la plaque de guidage (5) et/ou la pointe du soc (7) présentent, sur leur côté arrière (21) dans la région latérale (42), des régions de guidage (20) sortant de la surface arrière de la plaque de guidage (5) et venant en appui contre le porte-outil (3).
